# EUROPEAN PATENT APPLICATION

(11) **EP 2 662 401 A1**
(43) Date of publication of application: **13.11.2013**
(21) Application number: 12382168.8
(22) Date of filing: 07.05.2012
(51) Int. Cl.: C08K 3/00

(54) **Polymer composites reinforced with alpha-alumina whiskers**

(71) Applicant: Neoker, S.L, 15895 Milladoiro - Ames (A Coruna) (ES); Universidade Da Coruña, 15071 A Coruña (ES)
(72) Inventor: Cerecedo Fernández, Carmen, 15895 Milladoiro - Ames - A Coruña (ES); Valcárcel Juárez, Victor, 15895 Milladoiro - Ames - A Coruña (ES); Guitián Rivera, Francisco, 15895 Milladoiro - Ames - A Coruña (ES); Abad López, María José, 15403 Ferrol (ES); Ares Pernas, Ana Isabel, 15403 Ferrol (ES); Noguerol Cal, Rosalía, 15403 Ferrol (ES); Dopico García, Sonia María, 15403 Ferrol (ES); García Pardo, Santiago, 15403 Ferrol (ES); García Fonte, Xoan Xosé, 15403 Ferrol (ES)
(74) Representative: ABG Patentes, S.L.

(57) **Abstract**

The present invention relates to polymer nanocomposites and the method for preparing them, using α-Al₂O₃ whiskers as the reinforcing fiber material, and having the resulting polymer nanocomposites superior flexural properties and thermal stability. Said α-Al₂O₃ whiskers are prepared previously by vapor-liquid-solid deposition (VLS), and in some embodiments the whiskers are silica-surface treated, structurally branched or directionally aligned. The invention also relates to a shaped article compromising the polymer nanocomposites as defined above, as well as the use of them for application comprising aeronautic, optical, food or medical sectors.

## Description

### FIELD OF THE INVENTION

The present invention relates to polymer nanocomposite materials and the method for preparing them, using α-Al₂O₃ whiskers as the reinforcing fiber material and at least one polymer matrix selected from the group consisting of thermoplastics, thermosets and elastomers.

### BACKGROUND

Composites are considered as a standard option for structural applications when high performances, such as mechanical and thermal resistance, are necessary. Among the large variety of composites, certainly polymeric matrix composites are the most used, in particular thermoplastic such as polyamide, polyethylene, polyurethane, vinyl polymers, and the like, thermosets, and elastomers, since their use, initially in aeronautic applications, it is now covering all types of engineering sectors.

As the structure-property relationships of composites have became better understood, the use of nanofillers is of increased interest in the formation of composites - referred as to nanocomposites. The addition of the nanofillers is meant to enhance various mechanical, tribological and thermal properties compared to in absence of such constituents. It is generally agreed that the large surface to volume ratio of the nanoscale constituents plays a key role to the improvements. Due to their high aspect ratio (typically larger than 50 to 100), small fractions of nanofillers (2 to 10 wt%) are enough to impart the polymer nanocomposites with mechanical properties as to those obtained upon 30 to 50 wt% of glass fiber, or compared to conventional micro- and macro-composites. For this reason, the development of polymer nanocomposites is rapidly emerging as a new class of composites that are particle-filled polymers for which at least one dimension of the dispersed particle is in the nanometer range.

Commonly used nanofillers are nanoclays. They are two-dimensional inorganic layered silicates intercalated within thermoplastic matrixes such as polyamide polymers (W02008/112362). When the clay is dispersed homogenously and exfoliated as individual layers through the polymer matrix, dramatic increases in strength and flexural modulus, and heat distortion temperature are observed at very low filler loadings (generally up to 10wt%). This is due to the large surface area contact between polymer and filler. However, due to the polar nature of layered silicates, attempts to generate nanocomposites in non-polar polyolefin matrixes such as polyethylene have been only marginally successful. US 2010/0152325, for example, describes melt compounding of polyethylene reinforced with halloysite nanoparticles exfoliated *in-situ.*

Carbon nanotubes (CNT) and carbon nanofibers (CNF) are described as one-dimensional nanofillers for polymer-based nanocomposites. Dong-Hyun *et al.* (W02006/123859) claims that mechanical properties of polymer matrixes such as PMMA, PVC y PE are enhanced when reinforced with carbon nanotubes or carbon nanofibers with diameters of 50 nm or less. However, the carbon nanotubes/nanofibers tend to agglomerate on the surface of the polymer, acting as defects and making difficult to enhance the mechanical properties. For that reason methods for uniformly dispersing carbon nanotubes/nano fibers are under current investigation.

Zero-dimensional metal oxide nanoparticles such as Aluminum Oxide (Al₂O₃), Zinc Oxide (ZnO), Titanium Oxide (TiO₂), or Zirconia (ZrOₙ) are widely used as nanofillers. For example, WO 2007/043496 described the preparation of ZnO/PMMA nanocomposites, and W02009/132406 refers to the preparation of TiO₂/PET nanocoposites.

Nano-alumina, especially in the form of γ-Al₂O₃ (bohemite), has received considerable attention as reinforcement of thermoplastics because of their high hardness, high strength and good wear resistance even at high temperatures. Generally it has been found that the presence of low loading of alumina nanoparticles tend to enhance the thermal and mechanical properties of many different polymer thermoplastics. For example, Reddy et al. (J. Reinforc. Plast. Compos. 2010, 29 (18), 2771-2781) described that the addition of 5wt% fraction of alumina nanoparticles improved the thermal decomposition temperature of polyether ether ketone (PEEK) by 27°C. Enhanced thermal stability of PE reinforced with nano-sized alumina has been described by Tadayyon et al. (Int. Polymer Processing XXVI (2011), 4, 354-360) as well as for PA11 (Lao et al. Sol. Freeform Fabrication Symposium Proceedings 2009, 529-537). Although most of alumina nanofillers are used as nanoparticles, composites of thermoplastic polymers/alumina nanofibers with extremely high properties have attracted also considerable interest (Noordin et al. (2010). Ashok Kumar (Ed.), ISBN: 978-953-7619-86-2, InTech). Owing to their high elastic modulus and to their thermal and chemical stability, alumina fibers can advantageously compete with other no fibrous fillers or even with non-oxide fibers (for example SiC), which lose their properties through oxidation or reaction with the matrixes at high temperatures. However, the existing use of alumina fibers as nanofiller in polymer nanocomposites is very limited due to the poor compatibility with polymeric materials.

Similar to other inorganic nanoparticles, nano-alumina is difficult to disperse in polymer matrices since its compatibility with polymeric materials is poor. As a consequence, there is the tendency for the fibers to cluster together and therefore deteriorating the bulk properties of the nanocomposites. The same effect on bulk properties has been observed due to poor interaction between the fibers and the polymer matrix (Sun et al.; Composites Sci. Techn. 2009, 69, 2392). The efficiency of a fiber reinforced composite depends on the matrix interface and the ability to transfer stress from the matrix to the fiber. To this end, synthesis of polymer nanocomposites with different fiber structures such asstructurally branched alumina fibers has been also described (Hojo, F. et al.; J. Ceram. Soc. Jap. 2011, 119, 601-604). However, enhancement of thermal conductivity was not satisfactory due to fiber aggregation.

Thus, there are still opened challenges to facilitate the broad use of alumina nanofillers in polymer nanocomposites. First is the need to disperse the whiskers uniformly through the polymer substrate and secondly to facilitate the interaction between the nanofibers and polymer matrix.

Attempts to enhance the miscibility of alumina particles in the polymer substrate, facilitating the fiber dispersion in the polymer matrix involve functionalizing alumina nanoparticles. Chemically functionalized alumina nanoparticles (i.e. carboxylate-alumoxanes) in epoxy resin composites have been described (Shahid et al.; Compos. Sci. Techn. 2005, 65, 2250-2258). It was however observed that, although the functionalized alumina is miscible with the resin, a marked decrease in performance due to an increase in brittleness also appeared. This was proposed to be due to weak interaction between resin and the alumina fiber.

Furthermore, nanocomposite preparation methods have been developed to improve the fillers dispersion and interaction between the nanofiber and the polymer matrix. However, by applying the conventional melt-blending methods the resulting degree of filler dispersion in the nanocomposites is insufficient due to the agglomeration of the nanoparticles, causing a weak bonding, (Hussain et al.; J. Compos. Mater. 2006, 40, 1511-1576). More complex techniques, such as sol-gel processes (Siengchin et al.; Composites 2010, 41, 768-773), water-mediated melt compounding (Chen et al.; J. Appl. Polym. Sci. 2005, 95, 1032-1039), or using supercritical solvents (WO 2008/084021 Al) may improve the degree of dispersion, but they may either be only applicable to a few types of polymers or be rather expensive.

Mechanical milling (Tadayyon et al.; Int. Polymer Processing XXVI 2011, 4, 354-360), cryogenic mechanical milling (Stranz et al.; J. Metastable and Nanocrystalline Materials, 2005, 24-25, 609-614) and mechanical milling followed by hot extrusion (Flores et al.; J. Alloys Comp. 2007, 434-435, 518-521) have been adopted also as methods to facilitate good fiber dispersion in nanocomposites and superior interaction in the matrix-filler interface.

In view of the above, there is a need to obtain polymer nanocomposites compromising alumina nanofibers as reinforcing material, with a good fiber dispersion as well as strong interaction at the polymer-whiskers interface, in order to produce advanced polymer composites with superior mechanical and thermal properties.

α-Al₂O₃ whiskers are in particular good candidates for use as nanofillers in metallic composites (Corrochano et al.; Mater. Lett. 2008, 62, 103) and have the advantage of the absence of grain growth that appears at high temperatures in polycrystalline fibers. α-Al₂O₃ whiskers are defect-free, very thin fibers, which are in fact the most resistant materials known, even at high temperatures. Alumina nanofibers are usually produced using hydrothermal treatment (Ma et al.; Mater. Lett. 2009, 63, 881) and sol-gel techniques (Teoh et al.; J. Sol-Gel Sci. Technol. 2007, 44(3), 177) of various alumina precursors. These alumina nanofibers, which consist of fibrous boehmite, may be calcined to obtain the α-alumina nanofibers. The vapor-liquid-solid deposition method (VLS), consisting on burning aluminum together with silica nanoparticles at high temperature (Cerecedo-Fernández et al.; EP1975125 Al), allows obtaining pure monocristalline alumina fibers (alumina whiskers). However, the use of α-Al₂O₃ whiskers as reinforced material in polymer matrices has not been described.

### BRIEF DESCRIPTION OF THE INVENTION

The authors of the present invention have found that the use of α-Al₂O₃ whiskers as nanofillers in polymer matrices provides polymer nanocomposites with improved mechanical and thermal properties.

The advantage conferred by the incorporation of α-Al₂O₃ whiskers into the polymer matrices mainly arises as a consequence of the high aspect ratio (length-to-diameter ratio), which is proportional to the reinforcement effect on the matrix. In addition, alumina whiskers are superior to alumina polycrystalline fibers since they do not exhibit grain growth, not even at high temperature (>1000°C). This is an advantage over the existing fibrous nanofillers, since grain growth induces a subsequent decrease in the mechanical properties. Grain growth at high temperatures is usually restricted in polycrystalline fibers by the incorporation of additives, resulting in decreased grain growth and improved resistance. In the case of using alumina whiskers, additives are not necessary.

Therefore, a first aspect of the invention is the provision of a polymer nanocomposite material comprising at least one polymer matrix selected from thermoplastics, thermosets and elastomers, and α-Al₂O₃ whiskers as reinforcing nanofiller.

In a particular embodiment, the α-Al₂O₃ whiskers are directionally aligned.

In a particular embodiment, the α-Al₂O₃ whiskers are silica-surface treated α-Al₂O₃ whiskers.

In another particular embodiment, the α-Al₂O₃ whiskers are structurally branched α-Al₂O₃ whiskers.

Another aspect of the present invention relates to a process for the preparation of a polymer nanocomposite material as defined above, comprising:
a) providing α-Al₂O₃ whiskers and the polymer matrix;
b) forming a mixture by dry blending the polymer matrix and the α-Al₂O₃ whiskers;
c) melt blending the mixture;
d) subjecting the melt-blended mixture to a molding process to form the final product.

An additional aspect of the invention refers to a shaped article comprising a polymer nanocomposite material as defined above.

Another aspect of the invention relates to the use of the polymer nanocomposite material as defined above for the preparation of components in aeronautic, optical, food or medical sectors.

### BRIEF DESCRIPTION OF THE DRAWINGS

Figure 1 shows SEM micrographs of a nanocomposite with HDPE content of 90 wt% and α-Al₂O₃ whiskers content of 10 wt%, wherein the α-Al₂O₃ whiskers are: a) before the purification treatment; b) after the purification treatment; and c) prepared as structurally branched; and d) after silica-surface modification.
Figure 2 shows SEM micrographs of a PA12/α-Al₂O₃ whiskers nanocomposite with different compositions, wherein: a) PA12 content is 85 wt% and α-Al₂O₃ whiskers content is 15 wt%, b) PA12 content is 90 wt% and α-Al₂O₃ whiskers content is 10 wt%;
and c) PA12 content is 95 wt% and α-Al₂O₃ whiskers content is 5 wt%;

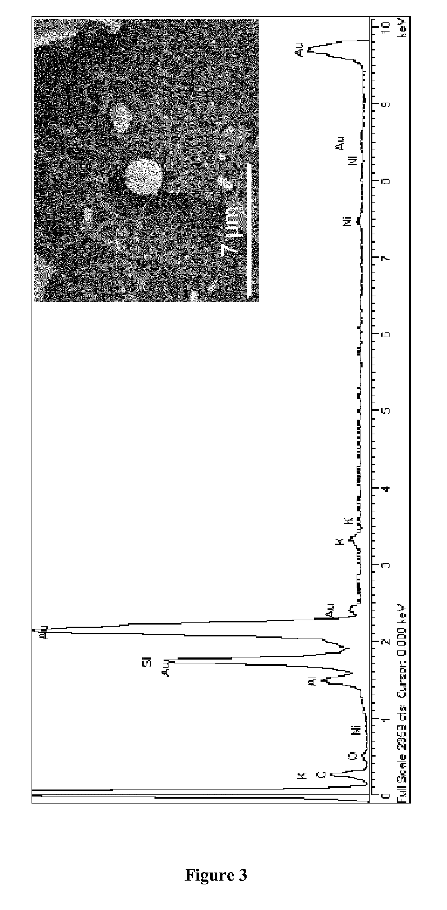

Figure 3 shows EDX analysis for the α-alumina whiskers before the purification treatment corresponding to the SEM analyses.
Figure 4 SEM micrographs of structurally branched Al₂O₃ whiskers.

### DETAILED DESCRIPTION OF THE INVENTION

The present invention relates to a polymer nanocomposite material comprising at least one polymer matrix selected from thermoplastics, thermosets and elastomers, and α-Al₂O₃ whiskers as reinforcing nanofillers.

The term 'polymer nanocomposite' refers to a composite that is a fiber-filled polymer for which at least one dimension of the dispersed fiber is in the nanometer range.

Thermoplastics, thermosets and elastomers of any type can be used to prepare said polymer nanocomposites according to the invention. However, in a particular embodiment, it is preferred the use of thermoplastic polymers.

Thermoplastic polymers are well known in the art and encompass those polymers, also known as thermosoftening polymers, which become soft and formable when heated and rigid when cooled significantly below their softening point. They are made up of long, unlinked polymer chains, generally with a high molecular weight. Because the molecular chains are unlinked, they rely on other interactions, such as dipole-dipole interactions, aromatic ring stacking, hydrogen bonds or Van der Waals forces.

In a particular embodiment of the invention, the thermoplastic polymer is selected from acrylonitrile-butadiene-styrene copolymer (ABS), (meth)acrylic polymer, cellulose acetate, cyclic olefin copolymer (COC), ethylene-vinyl acetate (EVA), ethylene vinyl alcohol (EVOH), fluoroplastics (PTFE, alongside with FEP, PFA, CTFE, ECTFE, ETFE), Kydex (a trademarked acrylic/PVC alloy), liquid crystal polymer (LCP), polyoxymethylene (POM or Acetal), polyacrylates, polyacrylonitrile (PAN or Acrylonitrile), polyamide (PA or Nylon), pPolyamide-imide (PAI), polyaryletherketone (PAEK or Ketone), polybutadiene (PBD), polybutylene (PB), polybutylene terephthalate (PBT), polycaprolactone (PCL), polychlorotrifluoroethylene (PCTFE), polyethylene terephthalate (PET), polycyclohexylene dimethylene terephthalate (PCT), polycarbonate (PC), polyhydroxyalkanoates (PHAs), polyketone (PK), polyester, polyethylene (PE), polyetheretherketone (PEEK), polyetherketoneketone (PEKK), polyetherimide (PEI), polyethersulfone (PES), chlorinated polyethylene (CPE), polyimide (PI), polylactic acid (PLA), polymethylpentene (PMP), polyphenylene oxide (PPO), polyphenylene sulfide (PPS), polyphthalamide (PPA), polypropylene (PP), polystyrene (PS), polysulfone (PSU), polytrimethylene terephthalate (PTT), polyurethane (PU), polyvinyl acetate (PVA), polyvinyl chloride (PVC), polyvinylidene chloride (PVDC) and styrene-acrylonitrile (SAN).

Preferably, the thermoplastic polymer is selected from polyamide (PA), polyethylene (PE), polycarbonate (PC), polypropylene (PP) and acrylonitrile-butadiene-styrene copolymer (ABS). More preferably, the thermoplastic polymer is a polyamide or polyethylene, even more preferably are the polyamides known as PA66 and PA6 or mixtures thereof and mixtures of polycarbonate and acrylonitrile-butadiene-styrene copolymer.

In a preferred embodiment, the invention relates to a polymer nanocomposite comprising polyethylene as polymer matrix and α-Al₂O₃ whiskers as reinforcing nanofillers.

In another preferred embodiment, the invention relates to a polymer nanocomposite comprising a polyamide as the polymer matrix and α-Al₂O₃ whiskers as reinforcing nanofillers.

In another preferred embodiment, the invention relates to a polymer nanocomposite comprising a polymer blend selected from PC/ABS and PA66/PA6 and α-Al₂O₃ whiskers as reinforcing nanofillers.

The term "α-Al₂O₃ whiskers" refers to single-crystal aluminum oxide fibers with preferential growth in the direction of the c-axis orientation of the hexagonal system present for the alpha-alumina phase (corundum).

In a particular embodiment of the invention, the α-Al₂O₃ whiskers have an aspect ratio higher than 5, more preferably between 10 and 80, more preferably between 25 and 50. By the term "aspect ratio" it is understood the ratio between the length of the fiber and its diameter. Preferably, the length of the fiber is ranging between 0.01 and 10 µm.

Due to the high aspect ratio, small fractions of α-Al₂O₃ whiskers are enough to impart the nanocomposite with improved mechanical and thermal properties. Thus, in another particular embodiment, the α-Al₂O₃ whiskers are present in a proportion ranging from 5 to 30 wt% with respect to the total weight of the polymer nanocomposite, more preferably from 8 to 20 wt%, even more preferably in a proportion of about 10 wt%.

In another particular embodiment, α-Al₂O₃ whiskers have a tensile strength higher than 6 GPa, more preferably between 10 and 25 GPa.

The α-Al₂O₃ whiskers comprised in the nanocomposite of the invention can be prepared by a vapor-liquid-solid deposition method (VLS) with a fiber ending drop mechanism under inert atmospheres and the addition of selected transition metals that improves the amount of produced α-Al₂O₃ fibers. A method for the preparation of α-Al₂O₃ fibers by VLS is particularly described in Spanish patent ES2182684.

In the context of the present invention, the term "vapor-liquid-solid deposition method (VLS)" stands for Vapor (V) feed gases, Liquid catalyst (L), and Solid crystalline (S) whisker growth. α-Al₂O₃ whiskers are readily produced by this method and grow into a white, cotton-like mass of crystals around the aluminum piece. Each fiber had a hexagonal section, drops at one of its ends, and one basal hexagonal pyramid. The drops at the ends of the fibers demonstrate that the fibers had grown via VLS deposition.

In a particular embodiment, the α-Al₂O₃ whiskers have purity higher than 99.9%, more preferably higher than 99.97%. The purification of α-Al₂O₃ whiskers previously obtained by the VLS method described above can be carried out by volatilization of the impurities in the solid phase using vacuum at oxygen partial pressure lower than 10⁻¹ atm and temperatures ranging from 1400 and 2000°C.

The polymer nanocomposite of the present invention has improved mechanical properties and improved stability when compared to the pure polymer matrix. Said mechanical properties of the polymer nanocomposites as defined above were measured from compression molded specimens. The specimens were compression molded into two plates (4mm width) at 170°C and 50 bars during 5 min.

In a particular embodiment, said polymer nanocomposite material has a flexural modulus percentage increase ranging from 60 to 300% when a specimen of the material is tested under the standard ISO 178.

In another particular embodiment, said polymer nanocomposite material has a flexural strength percentage increase ranging from 50 to 80% when a specimen of the material is tested under the standard ISO 178.

Said flexural tests were conducted under three-point conditions in accordance with the international standard ISO 178 with a 5 mm/min deformation speed over compression molded specimens.

In a particular embodiment, said polymer nanocomposite material has a thermal-stability temperature increase ranging from 5 to 44°C.

The α-Al₂O₃ whiskers can be aligned randomly as well as non-uniformly dispersed within the polymer matrix during the preparation of the composite material. However, in a preferred embodiment, α-Al₂O₃ whiskers are directionally aligned within the polymer matrix. The authors of this invention have found that when whiskers are aligned during the process that leads to the preparation of the polymer nanocomposite, strong mechanical bond between the polymer matrix and the whiskers is generated as well as absence of fiber agglomeration.

Therefore, in a preferred embodiment the invention relates to a polymer nanocomposite comprising at least one thermoplastic polymer matrix and directionally aligned α-Al₂O₃ whiskers as reinforcing nanofillers.

The α-Al₂O₃ whiskers are directionally aligned within the matrix along the extrusion direction. In the context of the present invention, the term "directionally aligned" refers to whiskers aligned in such a way that 90% of them have their major axis inside an angle of less than 20° around the extrusion direction.

The aligned whiskers can be obtained by using mechanical mixer followed by extrusion during the polymer nanocomposites preparation. More particularly, the directionally aligned α-Al₂O₃ whiskers can be obtained mechanically mixer the whiskers with the polymer matrix and further compounding on a conical counter-screw extruder.

In a particular embodiment, the α-Al₂O₃ whiskers are silica-surface treated α-Al₂O₃ whiskers. By the term "silica-surface treated α-Al₂O₃ whiskers" it is understood α-Al₂O₃ whiskers whose surface has been treated with silica to incorporate silanol groups thereon.

Thus, a preferred embodiment of the invention refers to a polymer nanocomposite comprising at least one polymer selected from thermoplastics, thermosets and elastomers, and silica-surface treated α-Al₂O₃ whiskers as reinforcing nanofillers.

The silica-surface treated α-Al₂O₃ whiskers enhance the interaction between alumina surfaces and the polymer matrix. In particular, the presence of hydroxyl groups from silanol on the fiber surface enhance interactions occurring across fiber-polymer interfaces by forming hydrogen bonding.

Said silica-surface treated α-Al₂O₃ whiskers can be obtained by first adding the alumina whiskers in a solution of silisol. Silisol is an aqueous phase colloidal solution of silica particles. Preferably, the content of the silica particle in the aqueous solution ranges from 10 to 70 wt%.

Once the whiskers are added to the silisol solution, they are dried in an oven at 80°C for 12 hours.

In a particular embodiment, said silica-surface treated α-Al₂O₃ whiskers comprise on its surface a silanol composition ranging from 5 to 40 wt% based on the total weight of the modified α-Al₂O₃ whisker.

In another particular embodiment, the α-Al₂O₃ whiskers are structurally branched α-Al₂O₃ whiskers.

In the context of the present invention, the term 'structurally branched whiskers' refers to whiskers with flat shapes and branching out at fixed angles (60°).

Thus, another preferred embodiment of the invention refers to a polymer nanocomposite comprising at least one polymer matrix selected from thermoplastics, thermosets and elastomers and structurally branched α-Al₂O₃ whiskers as reinforcing nanofillers.

Said branched α-Al₂O₃ whiskers enhance the ability to transfer stress from the matrix to the fiber as well as the thermal conductivity along the polymer matrix, due to the dendritic structure on the fiber. This type of fiber structure increases the surface area of interaction between the polymer matrix and the fibers.

Said structurally branched α-Al₂O₃ whiskers are obtained according to Valcárcel, V. et al. (J. Am. Ceram. Soc., 2003, 86, 1683-1690) using argon atmosphere at temperatures between 1300°-1500°C.

Another aspect of the present invention relates to a process for the preparation of a polymer nanocomposite material as defined above, comprising:
a) providing α-Al₂O₃ whiskers and the polymer matrix;
b) forming a mixture by dry blending the polymer matrix and the α-Al₂O₃ whiskers;
c) melt blending the mixture;
d) subjecting the melt-blended mixture to a molding process to form the final product.

The components of the polymer nanocomposite are preferably blended in a powder form. The step of melt blending the mixture of the components can be carried out in an extrusion process such a single screw film extrusion process.

The molding process can be done by a process selected from molding, compounding extrusion, co-extrusion, film blow molding, blow molding, injection molding, rotomolding, thermoforming, vacuum forming, calendaring, matched-die molding, hand lay-up, filament winding and casting.

Alternatively, the process for preparing the polymer nanocomposite of the invention includes the initial formation of a masterbatch of high α-Al₂O₃ whiskers concentration to form a concentrated nanocomposite that can be then further compounded with the pure polymer to yield the final nanocomposite.

For example, the master or concentrated batch or composite is an intimate mixture of about 5 wt% to about 60 wt% of α-Al₂O₃ whiskers and approximately 40 wt% to 95 wt% of polymer.

The masterbatch can be obtained in the form of pellets, flakes or powder as they may be formed from melt compounding or blending techniques, using for example a twin-screw extrusion process, and of precipitates as they may be formed from blending techniques involving solvent blending and precipitation.

After completion, the masterbatch may be used in its high-concentrated state. However, in a preferred embodiment the masterbatch is further dry blended with additional polymer material, being the mixture subsequently subjected to steps c) and d) as described above to produce a nanocomposite with a desired α-Al₂O₃ whisker concentration and a satisfactory dispersion of α-Al₂O₃ whiskers in the nanocomposite.

In another aspect, the invention refers to a shaped article comprising a polymer nanocomposite material as defined above.

Finally, another aspect of the invention refers to the use of a polymer nanocomposite material as defined above, for the preparation of components in aeronautic, optical, food or medical sectors.

### Examples

### Example 1. Preparation of HDPE/α-Al₂O₃ whisker nanocomposites with silica-surface treated whiskers.

For the polymer matrix, high-density polyethylene (HDPE) powder was used. The melt flow index (MFI) of the employed HDPE was experimentally determined to be 2.4 g/10min (ASTM D1238 — 175°C, 2.16 kg). α-Al₂O₃ whiskers used as nanofillers were previously synthesized according to the patent application ES2182684 and further purified by volatilization of the impurities in the solid phase using vacuum at oxygen partial pressure lower than 10⁻¹atm and temperatures ranging from 1400 and 2000°C. (purity ≥ 99.97%). The resulting α-Al₂O₃ whiskers were surface treated with a solution of silisol in water (10-70% silica particle content). The fibers were dried in an oven at 80°C for 12 hours. The resulting modified whiskers have an aspect ratio ≥10, length > 0.01 µm and tensile strength ≥ 6 GPa.

The nanocomposite was then compounded powder mixing the polymer and the whiskers in an internal mixer at 160°C and a speed of 45 rpm during 3 minutes. The resulting nanocomposite composition was as follows:

| **Component** | **Composition (wt%)** |
|---|---|
| *HDPE* | 90 |
| *Al₂O₃ whiskers* | 10 |

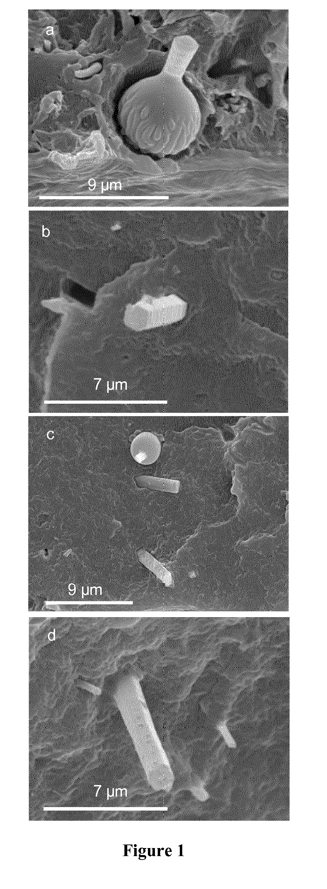

See Figure 1a, b and d for SEM micrographs of the prepared polymer nanocomposites.

### Example 2. Thermal stability of HDPE/silica-surface treated α-Al₂O₃ whisker nanocomposites (example 1).

The thermal stability of the nanocomposite prepared in the example 1 was measured using thermo gravimetric analysis (TGA) under argon with a heating rate for the dynamic conditions 10°C/min. The nanocomposite showed higher thermal-oxidative degradation temperature than that of the pure HDPE with an increment of 39°C (8.5%).

### Example 3. Flexural testing of HDPE/silica-surface treated α-Al₂O₃ whisker nanocomposites (example 1)

The mechanical properties of the nanocomposite prepared in the example 1 were measured from compression molded specimens. The specimens were compression molded into two plates (4mm width) at 170°C and 50 bars during 5 min. Flexural tests were then conducted in accordance with ISO 178 (5 mm/min deformation speed) for the prepared specimens. The flexural properties studied under three-point conditions were the flexural modulus and flexural strength.

The nanocomposites exhibited higher flexural modulus and strength than the pure HDPE counterpart. The results are shown in the following table:

| **Flexural test** | **Percent increase (%)** |
|---|---|
| *Flexural modulus* | 64 |
| *Flexural strength* | 43 |

### Example 4. Preparation of HDPE/α-Al₂O₃ whiskers nanocomposites with directionally aligned whiskers.

For the polymer matrix, high-density polyethylene (HDPE) powder was used. The melt flow index (MFI) of the HDPE was experimentally determined to be 2.4 g/10min (ASTM D1238 — 175°C, 2.16 kg). α-Al₂O₃ whiskers used as nanofillers were previously synthesized according to the patent application ES2182684 and further purified according to the patent application EP11382370.2 (purity ≥ 99.97%). The fibers were dried in an oven at 80°C for 12 hours. The resulting modified whiskers have an aspect ratio ≥10, length ≥ 0.01 µm and tensile strength ≥ 6 GPa.

The nanocomposite was then compounded on a conical counter-screw extruder at 160°C and a screw-speed of 40 rpm during 1 minute. In this way the alumina fibers were longitudinally orientated respect to the polymer matrix. The increase respect to those randomly oriented is higher. The resulting nanocomposite composition was as follows:

| **Component** | **Composition (wt%)** |
|---|---|
| *HDPE* | 90 |
| *Al₂O₃ whiskers* | 10 |

### Example 5. Flexural testing of HDPElaligned α-Al₂O₃ whisker nanocomposites (example 4).

The mechanical properties of the nanocomposite prepared in the example 4 were measured from compression molded specimens. The specimens were compression molded into two plates (4mm width) at 170°C and 50 bars during 5 min. Flexural tests were then conducted in accordance with ISO 178 (5 mm/min deformation speed) for the prepared specimens. The flexural properties studied under three-point conditions were the flexural modulus and flexural strength. The nanocomposites exhibited higher flexural modulus and strength than the pure HDPE counterpart. The results are shown in the following table:

| **Flexural test** | **Percent increase (%)** |
|---|---|
| *Flexural modulus* | 294 |
| *Flexural strength* | 76 |

### Example 6. Preparation of PA12/α-Al₂O₃ whisker nanocomposites with silica-surface treated whiskers.

For the polymer matrix, polyamide 12 (PA12) powder was used with a melting temperature around 185°C. α-Al₂O₃ whiskers used as nanofillers were previously synthesized according to the patent application ES2182684 volatilization of the impurities in the solid phase using vacuum at oxygen partial pressure lower than 10⁻¹ atm and temperatures ranging from 1400 and 2000°C (purity ≥ 99.97%). The resulting α-Al₂O₃ whiskers were surface treated with a solution of silisol in water (10-70% silica particle content). The fibers were dried in an oven at 80°C for 12 hours. The resulting modified whiskers have an aspect ratio ≥10, length ≥ 0.01 µm and tensile strength ≥ 6 GPa.

The nanocomposite was then compounded powder mixing the polymer and the whiskers in an internal mixer at 200°C and a speed of 45 rpm during 3 minutes. The resulting nanocomposite composition was as follows:

| **Component** | **Composition (wt%)** |
|---|---|
| *PA12* | 90 |
| *Al₂O₃ whiskers* | 10 |

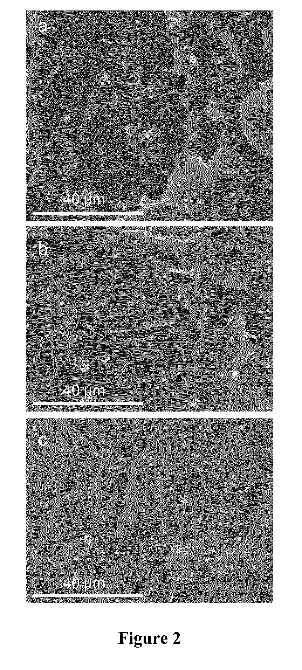

See Figure 2b for a SEM micrograph of the prepared polymer nanocomposite.

### Example 7. Thermal stability of PA12/silica-surface treated α-Al₂O₃ whisker nanocomposite (example 6).

The thermal stability of the nanocomposite prepared in the example 6 was measured using thermo gravimetric analysis (TGA) under argon with a heating rate for the dynamic conditions 10°C/min. The nanocomposite showed higher thermal-oxidative degradation temperature than that of the pure PA12 with an increment of 35°C (8.1%).

### Example 8. Preparation of PA12/α-Al₂O₃ whisker nanocomposites with structurally branched whiskers.

For the polymer matrix, polyamide 12 (PA12) powder was used with a melting temperature around 185°C. Branched α-Al₂O₃ whiskers used as nanofillers were synthesized according to Valcárcel, V. et al. (J. Am. Ceram. Soc., 2003, 86, 1683-1690) placing small pieces of aluminum over a shallow bed of quartz, in an inert furnace atmosphere of argon, at temperatures between 1300° and 1500°C for 2 hours (purity > 99.97%). The α-Al₂O₃ fiber crystals grow around the aluminum piece as a thin layer. The fibers were dried in an oven at 80°C for 12 hours.

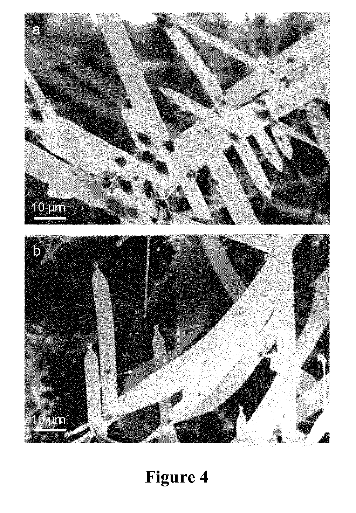

The resulting branched α-Al₂O₃ whiskers have flat shapes with branch width between about 1mm and 20mm, triangular tips with eventual drops, and branching out at fixed angles (60°) to produce large single crystals with elaborate dendritic structures (Fig. 4). They are highly transparent and bright because their flat structure which facilitates the interference of light.

The nanocomposite was then compounded powder mixing the polymer and the whiskers in an internal mixer at 200°C and a speed of 45 rpm during 3 minutes. The resulting nanocomposite composition was as follows:

| **Component** | **Composition (wt%)** |
|---|---|
| *PA12* | 90 |
| *Al₂O₃ whiskers* | 10 |

### Example 9. Thermal stability of PA12/branched α-Al₂O₃ whisker nanocomposite (example 8).

The thermal stability of the nanocomposite prepared in the example 8 was measured using thermo gravimetric analysis (TGA) under argon with a heating rate for the dynamic conditions 10°C/min. The nanocomposite showed higher thermal degradation temperature than that of the pure PA12 with an increment of 38°C (8.7%).

### Example 10. Flexural testing of PA12/branched α-Al₂O₃ whisker nanocomposite (example 8).

The mechanical properties of the nanocomposite prepared in the example 8 were measured from compression molded specimens. The specimens were compression molded into two plates (4mm width) at 170°C and 50 bars during 5 min. Flexural tests were then conducted in accordance with ISO 178 (5 mm/min deformation speed) for the prepared specimens. The flexural properties studied under three-point conditions were the flexural modulus and flexural strength. The nanocomposites exhibited higher flexural modulus and strength than the pure PA12 counterpart. The results are shown in the following table:

| **Flexural test** | **Percent increase (%)** |
|---|---|
| *Flexural modulus* | 92 |
| *Flexural strength* | 67 |

## Claims

1. A polymer nanocomposite material comprising at least one polymer selected from thermoplastics, thermosets and elastomers, and α-Al₂O₃ whiskers as reinforcing nanofillers.

2. The polymer nanocomposite material according to claim 1, wherein the polymer is a thermoplastic polymer.

3. The polymer nanocomposite material according to any of claims 1 and 2, wherein the thermoplastic polymer is selected from polyamide, polyethylene, polycarbonate, polypropylene and acrylonitrile-butadiene-styrene copolymer.

4. The polymer nanocomposite material according to any of claims 1 to 3, wherein α-Al₂O₃ whiskers are present in a proportion ranging from 5 to 30 wt% with respect to the total weight of the polymer nanocomposite.

5. The polymer nanocomposite material according to any of claims 1 to 4, wherein α-Al₂O₃ whiskers are obtainable by vapor-liquid-solid deposition (VLS).

6. The polymer nanocomposite material according to any of claims 1 to 5, wherein α-Al₂O₃ whiskers are directionally aligned.

7. The polymer nanocomposite material according to any of claims 1 to 6, wherein α-Al₂O₃ whiskers are silica-surface treated α-Al₂O₃ whiskers.

8. The polymer nanocomposite material according to any of claims 1 to 6, wherein α-Al₂O₃ whiskers are structurally branched α-Al₂O₃ whiskers.

9. A process for the preparation of a polymer nanocomposite material as defined in any of claims 1 to 8, said process comprising:
a) providing α-Al₂O₃ whiskers and the polymer matrix;
b) forming a mixture by dry blending the polymer matrix and the α-Al₂O₃ whiskers;
c) melt blending the mixture;
d) subjecting the melt-blended mixture to a molding process to form the final product.

10. A shaped article comprising a polymer nanocomposites material as defined in any of claims 1 to 8.

11. Use of a polymer nanocomposite material as defined in any of claims 1 to 8 for the preparation of components in aeronautic, optical, food or medical sectors.
